Europäisches Patentamt

**European Patent Office**

Office européen des brevets

(19)

(11) Publication number: **0 003 904**
**B1**

(12) # EUROPEAN PATENT SPECIFICATION

(45) Date of publication of patent specification: **19.05.82**

(51) Int. Cl.³: **C 02 F 1/06, C 02 F 1/14**

(21) Application number: **79300264.3**

(22) Date of filing: **21.02.79**

(54) **Improvements in or relating to desalination apparatus and method.**

(30) Priority: **22.02.78 GB 698378**
**27.10.78 GB 4228678**
**15.12.78 GB 4874578**

(43) Date of publication of application:
**05.09.79 Bulletin 79/18**

(45) Publication of the grant of the patent:
**19.05.82 Bulletin 82/20**

(84) Designated Contracting States:
**BE DE FR IT NL SE**

(56) References cited:
**DE - A - 1 517 530**
**DE - A - 2 655 568**
**DE - C - 838 722**
**FR - A - 394 177**
**FR - A - 2 249 842**
**GB - A - 731 997**
**NL - A - 6 608 441**
**US - A - 3 138 546**
**US - A - 3 928 145**

(73) Proprietor: **John Watson Developments Limited**
**Lady Lea Road Horsley Woodhouse**
**Derby DE7 6AZ (GB)**

(72) Inventor: **Sanders-Fox, Douglas**
**7 Gillat Street Marlpool**
**Heanor Derbyshire (GB)**

(74) Representative: **Drever, Ronald Fergus et al,**
**Swindell & Pearson 44, Friar Gate**
**Derby DE1 1DA (GB)**

## Improvements in or relating to Desalination Apparatus and Method

This invention relates to a method of, and apparatus for the separation of water or other liquids from chemical or solid organic matter therein. For ease of description reference will be made hereinafter to only one main application of the apparatus, i.e. the desalination of seawater.

The provision of fresh water is a problem in many countries in particular desert countries, where rainfall is scarce and there is a lack of rivers or other water sources. Attempts have been made to provide water by the desalination of seawater, to which many of such countries have ready access but conventional desalination plants which could operate on a scale sufficient for the purpose of providing water for drinking, irrigation etc. are extremely costly both to install and maintain, requiring a considerable input of power for running of the plant. Such a plant is described in United State Patent Specification No. 3138546. US—A—3928145 describes a desalination plant wherein sub-atmospheric steam obtained by flash-evaporation of solar-heated seawater is expanded through a steam-engine to produce useful work. FR—A—2 249 842 describes a desalination plant wherein the saline balance of solar-heated seawater undergoing evaporation is regulated.

It is an object of the present invention to provide an apparatus for use in the desalination of seawater which can be designed to provide continuously a sufficient quantity of fresh water from seawater, and yet which once installed at a desired location, is relatively simple to maintain and can generate itself the power required for continuous running.

According to the present invention there is provided apparatus for use in the desalination of seawater, said apparatus comprising means for transferring seawater from a reservoir arrangement, effecting evaporation of the seawater and passing the evaporated water vapour to heat exchange means so as to effect condensation of the evaporated water, and means for delivering seawater remaining in the evaporating means into the reservoir arrangement for heating therein by solar energy, and means for maintaining a salinity balance in the seawater delivered into the reservoir arrangement, wherein means designed to operate under the flow characteristics of subatmospherically evaporated water vapour so as to generate power is provided in the path of flow of the vapour, and the means for continuously maintaining the salinity balance in the seawater delivered into the reservoir arrangement comprises a flow circuit having control means for the flow of seawater therein, the control means being operable by the power generating means to control the flow of seawater in accordance with the rate of evaporation.

Preferably also the means for delivering seawater into the reservoir arrangement comprises a flow arrangement for collecting solar energy, the flow arrangement comprising elongate flexible conduit means arranged to be located on a terraced support surface which slopes in a direction towards the reservoir arrangement, at least the surface of the conduit means which is arranged to be adjacent to the support surface having the ability to convert solar energy to heat.

According to the present invention there is also provided a method of effecting desalination of seawater, said method comprising forming a lagoon in the ground as a reservoir for seawater which can be heated by solar energy, effecting evaporation of seawater removed from the reservoir, condensing the evaporated water vapour by heat exchange means and removing the condensate, returning the remaining water into the reservoir, and maintaining a salinity balance in the seawater delivered into the reservoir arrangement, wherein the method comprises generating power from the flow of the water vapour which is subatmospherically evaporated, and continuously maintaining a salinity balance in the seawater delivered into the reservoir arrangement by controlling the flow of seawater for the salinity balance in accordance with the rate of evaporation.

An embodiment of the present invention will now be described by way of example only with reference to the accompanying drawings in which:—

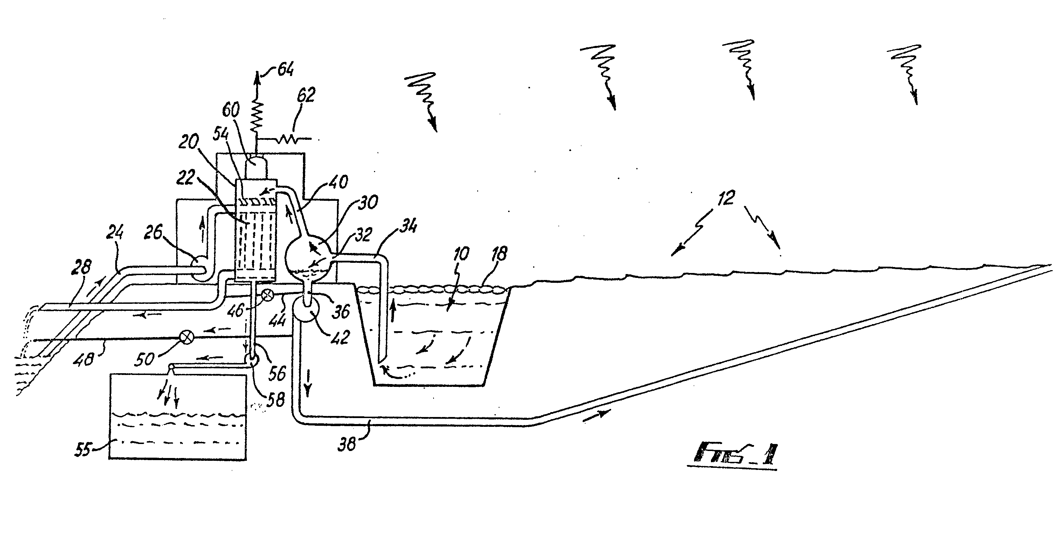

Fig. 1 is a schematic representation of an apparatus according to the invention;

Fig. 2 is a schematic representation of a flow arrangement of the apparatus of Fig. 1; and

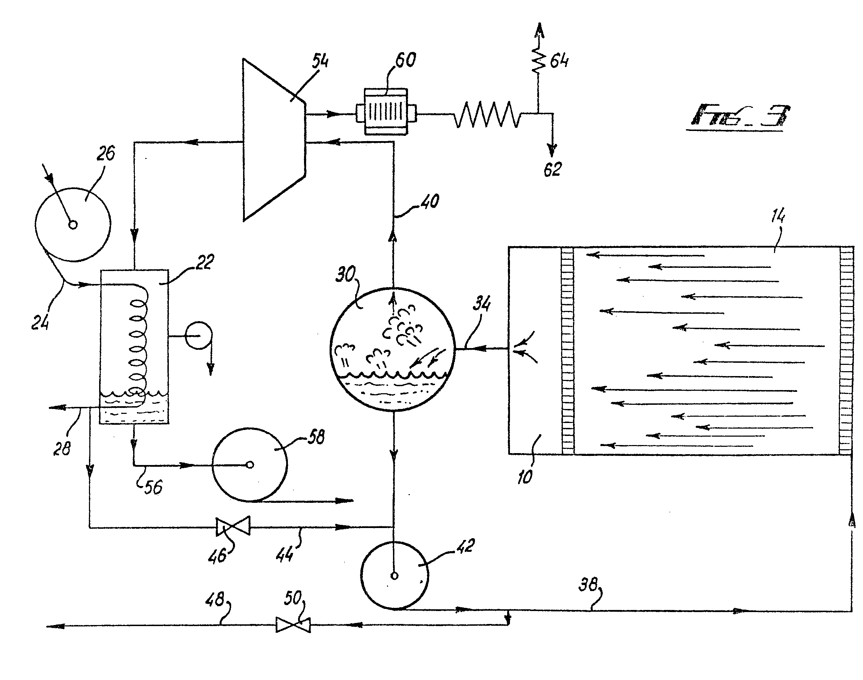

Fig. 3 is a flow circuit diagram of the apparatus of Figs. 1 and 2.

Referring to the drawings, a desalination apparatus is arranged to be erected particularly on a coastal strip of a desert area and requires an initial excavation of the area. A reservoir for seawater in the form of a lagoon 10 is formed in a known way at a location inland and, further inland of the lagoon 10, the ground is formed in a terraced fashion having a series of horizontal terrace areas 12 increasing steeply in height in a direction away from the lagoon 10. Each area 12 has a backfall against the direction of the slope.

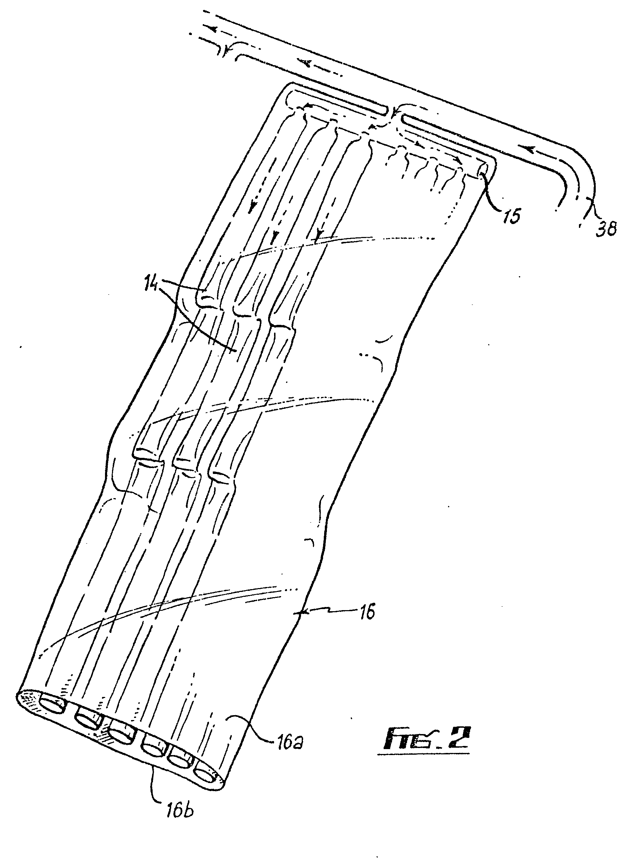

The terraced area is covered by conduit means in the form of tubular elements 14 (Fig. 2) of a dense black flexible plastics material, for example, polythene, independent of one another, but arranged, for ease of handling, in batches. Each tube 14 is connected at the upper end of the terraced area to an outlet of a distribution manifold 15 and the tubes 14 and manifold 15 are located within a main tubular member 16. The latter is formed in two parts 16a, 16b releasably joined together, the lower part 16b, on which the tubes 14 lie on the terraced area, being formed of a dense part 16a being formed of a transparent, ultra-violet inhibited flexible plastics material. The terraced nature of the ground causes the tubes 14 to deform when passing from one area 12 to another, which constricts the flow through the tubes to maintain them in a full condition and also improves agitation of the water. The back fall maintains the tubes 14 in a half full condition if the system is non-operative. The lagoon 10 is covered with a transparent bubbles plastics material 18 which reduces heat loss by re-radiation, wind effect and evaporation. The member 16 also reduces heat loss by re-radiation and wind effect and protects the tubes 14 against the ultra-violet degradation.

Between the lagoon 10 and the sea there is provided, in a housing 20, a heat exchanger 22 which has an inlet pipe 24 leading from the sea and incorporating a pump 26, and an outlet pipe 28 which also leads into the sea. At one side of the housing 20 there is provided a vacuum boiler 30, which has an inlet 32 communicating by means of a pipe 34 with the seawater in the lagoon 10 and a drain outlet 36 leading into a delivery pipe 38 for a purpose hereinafter described. The boiler 30 has a steam outlet 40 communicating with the upper end of the housing 20 such that the steam is subjected to limited travel between the boiler 30 and the housing 20.

The delivery pipe 38 extends to the uphill end of the tubes 14 and water is pumped from the boiler 30 to the manifold by means of a pump 42. Upstream of the pump 42 a first conduit or pipe 44 of an arrangement for continuously maintaining a salinity balance in the apparatus connects the drain outlet 36 with the heat exchanger outlet 28 through a flow control valve 46. Downstream of the pump 42 a second conduit or outlet pipe 48 connects with the delivery pipe 38 through a flow control valve 50.

The condensate in the housing 20 can be removed to a store 55 by means of a pipe 56 provided with a pump 58.

It may also be preferable to include a pump in the pipe 34 to assist in drawing seawater from the lagoon 10 and to provide a further pump operated by a vacuum switch in the housing 20 so as to remove any build-up of non-condensables in the seawater.

Further, power generating means in the form of a turbine 54 is located at the upper end of the housing 20 in the path of the steam from the boiler 30, such that passage of the steam through the turbine can, by virtue of a generator 60, generate power which can then be utilised to operate the various pumps in the apparatus via an output 62 and provide any surplus electricity at an output 64.

In use, the vacuum applied to the boiler 30 draws in seawater through the pipe 34 via a flow control valve, the heating of the seawater by solar energy enabling flash boiling to take place. The steam produced then passes into the housing 20 through the turbine 54 and condenses on the heat exchanger 22.

During day time hours the seawater in the lagoon 10 is heated by solar energy, and the seawater which drains from the boiler 30 into the delivery pipe 38 is passed to the tubes 14 to absorb solar energy when flowing into the lagoon 10. The arrangement of the tubes 14 is designed to be 2.4 times the size required to operate during day time hours so as to accommodate energy loss at night. The apparatus can then operate for 24 hours each day. Alternatively during the night the seawater in this pipe 38 may be diverted through a by-pass pipe (not shown) directly into the lagoon 10.

The arrangement for continuously maintaining the salinity balance operates without any power consumption additional to that necessary for normal operation of the desalination apparatus. This can be achieved because the inlet end of the pipe 44 is at at least atmospheric pressure while the other end of the pipe 44 is at the pressure at which flash boiling takes place, this being a convenient constant sub-atmospheric pressure. The flow of the seawater into the delivery pipe 44 is thus effected. As the pump 42 is required to raise the seawater to the level of the lagoon 10 which will not be less than 20 feet above sea level, this head of water, in addition to the pipe friction which is at maximum at the downstream side of the pump 42, creates a pressure at the inlet end of the pipe 48 greater than the pressure at the other end of the pipe 48, which is atmospheric. Thus flow through the pipe 48 is effected. The flow control valves 46, 50 are controlled by the turbine 54, the operation of which is of course dependent on the rate of evaporation, i.e. the flow of the dry saturated steam from the flash boiler.

To enable the salinity level in the lagoon 10 to be maintained at a predetermined multiple of the normal salinity level in the available seawater which is drawn in through the pipe 44, the flow rate in the latter is adjusted to be that predetermined multiple of the flow rate of the dry saturated steam from the boiler 30, the flow rate in the pipe 48 being adjusted to be the same as the flow rate of the dry saturated steam. By way of example, if 100 lb/min (45.5 Kg/min) of dry saturated steam is desired this will determine the required flow of seawater from the lagoon 10 to the boiler 30, and if the desired salinity level is to be twice that of the normal salinity level (assumed to be 5%), then this will require a flow rate of 1000 lb/min (454 Kg/min) of seawater containing 100 lbs (45.4 Kg) salt through the lagoon 10 into the boiler 30. The removal of the steam in the latter provides a flow rate of the seawater remaining in the boiler 30 of 900 lbs/min (408.6 Kg/min) still with 100 lbs (45.4 Kg) of salt. Added to this through the pipe 44 is 200 lbs/min (90.8 Kg/min) of seawater containing 10 lbs

(4.54 Kg) of salt (5%), creating a total flow to the pump 42 of 1100 lbs/min (499.4 Kg/min) of seawater containing 110 lbs (49.94 Kg) of salt. Seawater is then passed through the pipe 48 at 100 lbs/min (45.4 Kg/min), the proportion of salt included in this flow being 10 lbs (4.54 Kg). Thus in the pipe 38 to be delivered to the tubes 14 and the lagoon 10 there is 1100 − 100 = 100 lbs/min (499.4 − 45.4 = 454 Kg/min) of seawater including 110 − 10 = 100 lbs. (49.94 − 4.54 = 45.4 Kg) of salt, this being the flow requirement.

As the inlet end of the pipe 44 is a high temperature point and as the temperature of the seawater is increased before being transferred into the pipe 48, a flow rate could be selected which will prevent too much dumping of heat energy. It is envisaged that the heat energy contained in the seawater in the pipe 48 can be utilised by being arranged to have a heat exchange relationship with the incoming seawater in the pipe 44. As the inlet end of the pipe 44 is at relatively high temperature this minimises any cooling effect the seawater would otherwise have by being introduced into the flow circuit.

Thus there can be provided a continuous maintenance of the salinity level in the apparatus by means of this self balancing arrangement which requires no power additional to that already required by the desalination apparatus itself. Also as the arrangement is continuously operating there are no abrupt temperature changes occurring in the lagoon 10 which would be otherwise occasioned by pumping seawater into the reservoir only when required by the change in salinity level.

In a modification the solar collecting arrangement defined by the tubes 14 may be dispensed with and the lagoon 10 formed as a non-convecting solar pond. Such a pond is stratified with a low salinity layer on top of a high salinity layer such that sunlight can pass through the upper layer and be converted into heat energy in the lower layer, but a thermal barrier is defined by the junction of the two layers so as to prevent heat from escaping from the pond by means of convection. This arrangement is particularly suitable for the apparatus according to the invention wherein the salinity level can be predetermined as a multiple of the normal salinity level in the seawater.

It is known in a non-convecting solar pond that constant surface evaporation increases the salinity of the upper layer and that it is desirable to continuously replenish the pond with seawater, for example seawater from the outlet pipe 28. This seawater is flushed across the pond surface and spills to an outlet to the sea.

The interface between the two layers may be further defined by a membrane stretched across the pond on the top of the lower layer, such a membrane being formed of a transparent material, for example plastics. The inlet to the pond and the outlet from the pond would communicate with the lower layer and at the inlet a baffle arrangement could be provided to ensure distribution of the incoming seawater throughout the lower layer. In a modification the seawater may pass through the solar pond in a closed circuit which is in heat exchange relationship with the lower salinity layer.

Various other modifications may be made without departing from the invention. The tubes 14 may be formed of ultra-violet inhibited plastics material and can in fact be transparent.

## Claims

1. Apparatus for use in the desalination of seawater, said apparatus comprising means for transferring seawater from a reservoir arrangement, effecting evaporation of the seawater, and passing the evaporated water vapour to heat exchange means so as to effect condensation of the evaporated water, means for delivering seawater remaining in an evaporating arrangement into the reservoir arrangement for heating therein by solar energy, and means for maintaining a salinity balance in the seawater delivered into the reservoir arrangement, characterised in that means (54, 60) designed to operate under the flow characteristics of subatmospherically evaporated water vapour so as to generate power is provided in the path of flow of the vapour, and the means (44—50) for continuously maintaining the salinity balance in the seawater delivered into the reservoir arrangement (10) comprises a flow circuit having control means (46, 50) for the flow of seawater therein, the control means (46, 50) being operable by the power generating means (54, 60) to control the flow of seawater in accordance with the rate of evaporation.

2. Apparatus according to claim 1, characterised in that the power generating means comprises a turbine (54) designed to operate under the flow characteristics of subatmospherically evaporated water vapour and a generator (60), and the control means in the flow circuit comprises flow control valves (46, 50) operable thereby.

3. Apparatus according to claim 1 or 2, characterised in that the means for delivering seawater into the reservoir arrangement comprises a flow arrangement for collecting solar energy, the flow arrangement comprising elongate flexible conduit means (14) arranged to be located on a terraced support (12) which slopes in a direction towards the reservoir arrangement (10), at least the surface of the conduit means (14) which is arranged to be adjacent to the support surface (12) having the ability to convert solar energy to heat.

4. Apparatus according to claim 3, characterised in that the conduit means comprises a plurality of tubular elements (14) formed of a flexible material and extending substantially parallel to one another.

5. Apparatus according to claim 4, wherein the tubular elements (14) are formed of a dense black plastics material, or an ultra violet inhibited plastics material or a transparent plastics material.

6. Apparatus according to claim 4 or 5, characterised in that the tubular elements (14) are located within a main tubular member (16) which is formed in two parts releasably connected together.

7. Apparatus according to claim 6, characterised in that one part (16b) of the main tubular member (16) defining the surface arranged to be adjacent to the support surface is formed of a dense black flexible plastics material, the other part (16a) being formed of a transparent ultra-violet inhibited flexible plastics material.

8. Apparatus according to claim 1 or 2, characterised in that the reservoir arrangement (10) comprises a non-convecting solar pond which is stratified with a high salinity layer of seawater maintained below a low salinity layer of seawater, with an inlet to, and an outlet from the reservoir arrangement communicating with the lower layer, such that solar energy can pass through the upper layer and be collected in the reservoir arrangement while convected heat energy is prevented from passing out through the upper layer, and the solar pond is sustained by the salinity balance means (44—50).

9. A method of effecting de-salination of seawater, said method comprising forming a lagoon in the ground as a reservoir for seawater which can be heated by solar energy, effecting evaporation of seawater removed from the reservoir, condensing the evaporated water vapour by heat exchange means and removing the condensate, returning the remaining water into the reservoir, and maintaining a salinity balance in the seawater delivered into the reservoir arrangement, characterised by generating power from the flow of the water vapour which is subatmospherically evaporated, and continuously maintaining the salinity balance in the seawater delivered into the reservoir arrangement (10) by controlling the flow of seawater for the salinity balance in accordance with the rate of evaporation.

10. A method according to claim 9, characterised in that the salinity balance is continuously maintained by providing a flow of seawater through first conduit means (44) connected between an outlet (28) of an arrangement (22) for the condensing of the evaporated water and an upstream side of a pump (42) for removing the remaining water for return to the reservoir (10) and providing a flow of seawater through second conduit means (48) connected between the downstream side of the pump (42) and an outlet, and controlling the flow in each conduit means (44, 48) in accordance with the rate of evaporation.

11. A method according to claim 10, characterised in that the salinity level in the reservoir (10) is maintained at a predetermined multiple of the salinity level in the first conduit means (44) by effecting the same rate of flow in the second conduit means (48) as the rate of evaporation.

**Revendications**

1. Dispositif de dessalement de l'eau de mer du type comportant des moyens pour assurer le transfert de l'eau de mer à partir d'un réservoir, pour effectuer son évaporation et pour faire passer la vapeur de l'eau évaporée à des moyens d'échange thermique afin d'effectuer la condensation de l'eau évaporée, des moyens pour faire passer l'eau de mer qui reste dans un dispositif d'évaporation dans le réservoir pour l'y chauffer au moyen de l'énergie solaire ainsi que des moyens pour maintenir un équilibre de salinité dans l'eau de mer amenée dans le réservoir, caractérisé en ce que des moyens (54, 60) prévus pour travailler selon les caractéristiques d'écoulement de l'eau évaporée à une pression inférieure à la pression atmosphérique de façon à générer de l'énergie sont ménagés dans le trajet de l'écoulement de la vapeur et que des moyens (44, 50) permettant de maintenir de façon continue l'équilibre de salinité dans l'eau de mer alimentée dans le réservoir (10) comprennent un circuit d'écoulement muni de moyens de contrôle (46, 50) de l'écoulement de l'eau de mer, ces moyens de contrôle (46, 50) étant commandés par des moyens générateurs d'énergie (54, 60) pour contrôler le flux d'eau de mer en fonction de la vitesse d'évaporation.

2. Dispositif selon la revendication 1 caractérisé en ce que les moyens générateurs d'énergie comprennent une turbine (54) prévue pour travailler selon les caractéristiques d'écoulement de la vapeur d'eau évaporée à pression inférieure à la pression atmosphérique ainsi qu'un générateur (60) et que les moyens de contrôle placés dans le circuit d'écoulement comportent des vannes de réglage de l'écoulement (46, 50).

3. Dispositif selon la revendication 1 ou la revendication 2 caractérisé en ce que les moyens permettant l'alimentation de l'eau de mer dans le réservoir comportent un dispositif d'écoulement pour la captation de l'énergie solaire, ledit dispositif comprenant un système de tubes flexibles (14) prévu pour être placé sur une surface support en terrasse (12) dont la pente se dirige vers le réservoir (10), au moins la surface du système de tubes (14), prévu pour être adjacent à la surface support (12), étant susceptible de convertir l'énergie solaire en chaleur.

4. Dispositif selon la revendication 3 caractérisé en ce que le système de canalisations comporte une pluralité d'éléments tubulaires (14) en matière flexible et s'étendant sensiblement parallèlement les uns aux autres.

5. Dispositif selon la revendication 4 caractérisé en ce que les éléments tubulaires (14) sont réalisés en matière plastique d'un noir profond, ou en matière plastique protégée contre l'action des ultra-violets, ou en matière plastique transparente.

6. Dispositif selon la revendication 4 ou la revendication 5 caractérisé en ce que les éléments tubulaires (14) sont situés à l'intérieur d'un élément tubulaire principal (16) formé de deux parties reliées entre elles de façon amovible.

7. Dispositif selon la revendication 6 caractérisé en ce que l'une des parties (16b) de l'élément tubulaire principal (16) définissant la surface prévue pour être adjacente à la surface support est constituée d'une matière plastique souple d'une noir profond, l'autre partie (16a) ètant constituée d'une matière plastique transparente protégée contre l'action des ultra-violets.

8. Dispositif selon la revendication 1 ou la revendication 2 caractérisé en ce que le réservoir (10) comporte un bassin, non susceptible de faire convecter les radiations solaires, qui est stratifié par une couche d'eau de mer de salinité élevée avec une entrée au réservoir et une sortie du réservoir communiquant avec la couche inférieure de telle sorte que l'énergie solaire puisse traverser la couche supérieure et être collectée dans le réservoir tandis que l'énergie thermique convectée est empêchée de sortir au travers de la couche supérieure, et le bassin solaire est commandé par les moyens (44, 50) d'équilibre de la salinité.

9. Procédé permettant d'effectuer le dessalement de l'eau de mer du type consistant à former dans le sol une lagune servant de réservoir à l'eau de mer qui peut être chauffée par l'énergie solaire, à évaporer l'eau de mer retirée du réservoir, à condenser la vapeur d'eau évaporée par des moyens d'échange thermique et à enlever le condensat, à renvoyer l'eau restante dans le réservoir et à maintenir un équilibre de salinité dans l'eau de mer introduite dans le réservoir, caractérisé en ce que l'on crée de l'énergie à partir du flux de vapeur d'eau qui est évaporé à une pression inférieure à la pression atmosphérique et en ce que l'équilibre de salinité est maintenu de façon continue dans l'eau de mer alimentée dans le réservoir (10) par réglage de l'équilibre de salinité du courant d'eau de mer en fonction de la vitesse d'évaporation.

10. Procédé selon la revendication 9 caractérisé en ce que l'équilibre de salinité est maintenu de façon continue en faisant passer un courant d'eau de mer par la première canalisation (44) branchée entre une sortie (28) d'un dispositif (22) de condensation de l'eau évaporée et le côté amont d'une pompe (42) d'élimination de l'eau restante pour son retour au réservoir (10) et en faisant passer un courant d'eau de mer par la seconde canalisation (48) assurant la liaison entre le côté aval de la pompe (42) et une sortie, et en réglant le courant dans chaque canalisation (44, 48) en fonction de la vitesse d'évaporation.

11. Procédé selon la revendication 10 caractérisé en ce que le niveau de salinité dans le réservoir (10) est maintenu à une valeur qui est un multiple prédéterminé du niveau de salinité dans la première canalisation (44) en faisant passer le courant dans la seconde conduite à une vitesse similaire à la vitesse d'évaporation.

**Patentansprüche**

1. Anlage zur Verwendung bei der Entsalzung von Seewasser, mit Mitteln zum Überführen des Seewassers aus einer Speicheranordnung, zum Verdampfen des Seewassers und zum Überleiten des verdampften Wasserdampfes zu Wärmeaustauschmitteln, um eine Kondensation des verdampften Wassers zu erzielen, mit Mitteln zum Fördern von in einer Verdampfungseinrichtung verbleibendem Seewasser in die Speicheranordnung, damit es sich in dieser durch Solarenergie erhitzt, und mit Mitteln zum Erhalten eines Salzgehaltsgleichgewichtes in dem in die Speicheranordnung geförderten Seewasser, dadurch gekennzeichnet, daß im Strömungsweg des Dampfes Mittel (54, 60) zur Leistungserzeugung vorgesehen sind, die unter den Strömungscharakteristiken von unter-atmosphärisch verdampftem Wasserdampf arbeiten, und daß die Mittel (44 bis 50) zum kontinuierlichen Aufrechterhalten des Salzgehaltsgleichgewichts im zur Speicheranordnung (10) geförderten Seewasser einen Strömungskreis mit Steuermitteln (46, 50) für den Seewasserstrom in ihm enthalten, wobei die Steuermittel (46, 50) durch die Leistungserzeugungsmittel (54, 60) betätigbar sind, um den Seewasserstrom in Übereinstimmung mit der Verdampfungsrate zu steuern.

2. Anlage nach Anspruch 1, dadurch gekennzeichnet, daß die Leistungserzeugungsmittel eine unter unteratmosphärisch verdampftem Wasserdampf arbeitende Turbine (54) sowie einen Generator (60) enthalten und daß die Steuermittel im Strömungskreis hierdurch betätigbare Strömungssteuerventile (46, 50) enthalten.

3. Anlage nach Anspruch 1 oder 2, dadurch gekennzeichnet, daß die Mittel zum Fördern von Seewasser in die Speicheranordnung eine Strömungsanordnung zum Sammeln von Solarenergie enthalten, die längliche flexible Leitungsmittel (14) enthält, die zum Anordnen auf einer terrassierten Auflagefläche (12) vorgesehen sind, die in Richtung auf die Speicheranordnung (10) hin schräg abfällt, wobei mindestens die an die Auflagefläche (12) angrenzende Fläche der Leitungsmittel (14) die Fähigkeit besitzt, Solarenergie in Wärme umzuwandeln.

4. Anlage nach Anspruch 3, dadurch gekennzeichnet, daß die Leitungsmittel eine Mehrzahl von röhrenförmigen Elementen (14) enthält, die aus flexiblem Material gebildet sind und sich im wesentlichen parallel zueinander erstrecken.

5. Anlage nach Anspruch 4, dadurch gekennzeichnet, daß die röhrenförmigen Elemente (14) aus dichtem schwarzem Kunststoffmaterial oder aus mit einem Ultraviolett-Inhibitor versehenen Kunststoffmaterial oder aus einem transparenten Kunststoffmaterial gebildet sind.

6. Anlage nach Anspruch 4 oder 5, dadurch, gekennzeichnet, daß die röhrenförmigen Elemente (14) innerhalb eines Hauptröhrengleides (16) angeordnet sind, das aus zwei lösbar miteinander verbundenen Teilen gebildet ist.

7. Anlage nach Anspruch 6, dadurch gekennzeichnet, daß ein Teil (16b) des Hauptröhrengleides (16), das die an die Auflagefläche angrenzend angeordnete Fläche definiert, aus einem dichten schwarzen flexiblen Kunststoffmaterial und das andere Teil (16a) aus einem transparenten mit einem Ultraviolett-Inhibitor versehenen flexiblen Kunststoffmaterial gebildet ist.

8. Anlage nach Anspruch 1 oder 2, dadurch gekennzeichnet, daß die Speicheranordnung (10) einen nicht konvektierenden geschichteten Solarteich enthält, der eine unterhalb einer Sewwasserschicht niedriger Salzhaltigkeit angeordnete Seewasserschicht hoher Salzhaltigkeit besitzt, wobei ein Einlaß zu und ein Auslaß aus der Speicheranordnung vorhanden sind, die mit der unteren Schicht kommunizieren, derart, daß Solarenergie durch die obere Schicht passieren und in der Speicheranordnung gesammelt werden kann, während die konvektierte Wärmeenergie am Austreten durch die obere Schicht gehindert ist, und wobei der Solarteich durch die Salzgehaltsgleichgewichtsmittel (44 bis 50) in Gang gehalten wird.

9. Verfahren zum Entsalzen von Seewasser, das die Herstellung einer Lagune im Boden als Speicher für Seewasser, das durch Solarenergie erhitzt werden kann, das Verdampfen von aus dem Speicher entferntem Seewasser, das Kondensieren des verdampften Wasserdampfes durch Wärmeaustauschmittel und die Entfernung des Kondensats, das Rückleiten des verbleibenden Wassers in den Speicher und das Aufrechterhalten eines Salzgehaltsgleichgewichtes in dem in die Speicheranordnung geförderten Seewasser umfaßt, gekennzeichnet durch die Erzeugung von Leistung aus der strömung des Wasserdampfes, der unteratmosphärisch verdampft wird, und das kontinuierliche Aufrechterhalten des Salzgehaltgleichgewichtes in dem in die Speicheranordnung (10) geförderten Seewasser durch Steuerung der Strömung von Seewasser für das Salzgehaltgleichgewicht in Übereinstimmung mit der Verdampfungsrate.

10. Verfahren nach Anspruch 9, dadurch gekennzeichnet, daß das Salzgehaltgleichgewicht kontinuierlich aufrecht erhalten wird, indem eine Strömung von Seewasser durch erste Leitungsmittel, die zwischen einem Auslaß (28) einer Anordnung (22) zum Kondensieren des verdampften Wassers und einer stromaufwärtigen Seite einer Pumpe (42) zum Entfernen des verbleibenden Wassers für die Rückführung zum Speicher (10) verlaufen, und eine Strömung von Seewasser durch zweite Leitungsmittel (48) vorgesehen ist, die zwischen der stromabwärtigen Seite der Pumpe (42) und einem Auslaß verlaufen, und daß die Strömung in jedem Leitungsmittel (44, 48) in Übereinstimmung mit der Verdampfungsrate gesteuert wird.

11. Verfahren nach Anspruch 10, dadurch gekennzeichnet, daß die Höhe des Salzgehaltes im Speicher (10) bei einem vorbestimmten Vielfachen der Höhe des Salzgehaltes in den ersten Leitungsmitteln (44) gehalten wird, indem man die Strömungsrate in den zweiten Lösungsmitteln (48) gleich wie die Verdampfungsrate einstellt.

Fig_1

0 003 904

_FIG. 2_

FIG. 3

0 003 904